# EUROPÄISCHE PATENTANMELDUNG

(11) **EP 0 700 733 A1**
(43) Veröffentlichungstag der Anmeldung: **13.03.1996**
(21) Anmeldenummer: 95111669.8
(22) Anmeldetag: 25.07.1995
(51) Int. Cl.: B08B 3/02, B23Q 1/48, B23Q 1/62, B25J 9/02

(54) **Vorrichtung zum Reinigen und/oder Entgraten von Werkstücken mittels eines Flüssigkeits-Spritzstrahls**

(30) Priorität: 10.09.1994 DE 4432310
(71) Anmelder: INDA INDUSTRIEAUSRÜSTUNGEN GmbH, D-72666 Neckartailfingen (DE)
(72) Erfinder: Ponterlitschek, Roland, D-72636 Linsenhofen (DE)
(74) Vertreter: Reimold, Otto, Dipl.-Phys.Dr.

(57) **Zusammenfassung**

Eine Vorrichtung zum Reinigen und/oder Entgraten von Werkstücken mittels eines Flüssigkeits-Spritzstrahls weist eine Behandlungskabine (1) auf, in der drei rechtwinkelig zueinander verfahrbare Schlitten (12, 13, 14) angeordnet sind, von denen der dritte Schlitten (14) einen Spritzkopfträger (8) enthält, an dem eine Spritzdüse angebracht werden kann. Die Antriebsmotoren (15, 16, 17) für die Schlitten (12, 13, 14) sind außen an der Kabine angeordnet. Der Antrieb des zweiten Schlittens (13) und des dritten Schlittens (14) erfolgt über den ersten Schlitten (12) mittels jeweils eines Winkelgetriebes (26, 30), wobei der Antrieb des dritten Schlittens (14) ferner noch über den zweiten Schlitten (13) mittels eines an diesem angeordneten Winkelgetriebes (31) erfolgt.

## Beschreibung

Die Erfindung betrifft eine Vorrichtung zum Reinigen und/oder Entgraten von Werkstücken mittels eines Flüssigkeits-Spritzstrahls, mit einer Behandlungskabine, in der ein in drei zueinander rechtwinkeligen Raumrichtungen bewegbarer Spritzkopfträger angeordnet ist, wobei den Bewegungen in den drei Raumrichtungen jeweils ein außerhalb der Kabine angeordneter Antriebsmotor zugeordnet ist.

Bei einer aus der Praxis bekannten Vorrichtung dieser Art sitzt der Spritzkopfträger bzw. der von diesem gehaltene Spritzkopf mit der Spritzdüse an einem vertikalen Arm, der von oben her in die Kabine ragt. Alle anderen Einrichtungen, die zur Bewegung und Führung des Spritzkopfträgers vorgesehen sind, befinden sich zusammen mit den Antriebsmotoren außerhalb der Kabine oberhalb von dieser. Dies ergibt einen verhältnismäßig hohen Turm, was entsprechend viel Platz am Aufstellort erfordert.

Der vorliegenden Erfindung liegt daher in erster Linie die Aufgabe zugrunde, eine Vorrichtung der eingangs genannten Art zu schaffen, die einen platzsparenden Aufbau besitzt.

Diese Aufgabe wird erfindungsgemäß dadurch gelöst, daß innnerhalb der Kabine drei jeweils einer der Raumrichtungsbewegungen des Spritzkopfträgers zugeordnete Schlitten angeordnet sind, daß der erste, antriebsseitige Schlitten an einer kabinenfesten ersten Führungseinrichtung in der ersten Raumrichtung geführt ist und mit einer ersten, zur ersten Führungseinrichtung parallelen, ortsfest in der Kabine angeordneten und vom ersten Antriebsmotor angetriebenen Antriebsspindel in treibendem Eingriff steht, wobei der erste Schlitten ferner von zwei den beiden anderen Schlitten zugeordneten, zur ersten Antriebsspindel parallelen, ortsfest in der Kabine angeordneten und von den beiden anderen Antriebsmotoren angetriebenen Antriebswellen durchgriffen wird, daß der zweite Schlitten an einer vom ersten Schlitten getragenen zweiten Führungseinrichtung in der zweiten Raumrichtung geführt ist und mit einer zweiten, zur zweiten Führungseinrichtung parallelen und vom ersten Schlitten getragenen Antriebsspindel in treibendem Eingriff steht, die am ersten Schlitten mit der dem zweiten Schlitten zugeordneten Antriebswelle über ein die Bewegung des ersten Schlittens mitmachendes Winkelgetriebe treibend verbunden ist, und daß der dritte Schlitten, an dem der Spritzkopfträger angeordnet ist, an einer vom zweiten Schlitten getragenen dritten Führungseinrichtung in der dritten Raumrichtung geführt ist und mit einer dritten, zur dritten Führungseinrichtung parallelen und vom zweiten Schlitten getragenen Antriebsspindel in treibendem Eingriff steht, die mit der dem dritten Schlitten zugeordneten Antriebswelle treibend verbunden ist, indem eine vom ersten Schlitten getragene, zur zweiten Antriebsspindel parallele und den zweiten Schlitten durchgreifende Zwischenwelle einerseits am ersten Schlitten über ein die Bewegung des ersten Schlittens mitmachendes Winkelgetriebe mit der dem dritten Schlitten zugeordneten Antriebswelle und andererseits am zweiten Schlitten über ein die Bewegung des zweiten Schlittens mitmachendes Winkelgetriebe mit der dritten Antriebsspindel treibend verbunden ist.

Somit befinden sich mit Ausnahme der aus Sicherheitsgründen außen bleibenden Antriebsmotoren alle sonstigen zwischen diesen und dem Spritzkopfträger angeordneten Antriebs- und Führungsteile innerhalb der Behandlungskabine, die ohnehin ausreichend groß für die Aufnahme dieser Teile ist, so daß eine wesentlich kleinere Vorrichtung ohne außen an der Kabine besonders vorstehende Teile vorliegt. Zusätzlich zu den drei Linearbewegungen kann der Spritzkopfträger auch zu einer Rotationsbewegung um die zur Bewegungsrichtung des dritten Schlittens rechtwinkelige Spritzkopf-Achslinie antreibbar sein, indem der erste Schlitten von einer weiteren, zu den anderen Antriebswellen parallelen, ortsfest in der Kabine angeordneten und von einem weiteren außerhalb der Kabine sitzenden Antriebsmotor angetriebenen Antriebswelle durchgriffen wird, die über ein am ersten Schlitten angeordnetes Winkelgetriebe eine weitere vom ersten Schlitten getragene, zur zweiten Antriebsspindel parallele und den zweiten Schlitten durchgreifende Zwischenwelle treibt, die über ein am zweiten Schlitten angeordnetes Winkelgetriebe mit einer zur dritten Antriebsspindel parallelen und vom zweiten Schlitten getragenen Abtriebswelle treibend verbunden ist, die ihrerseits über ein am dritten Schlitten angeordnetes und dessen Bewegung mitmachendes Winkelgetriebe mit dem Spritzkopfträger treibend verbunden ist.

Ferner kann vorgesehen sein, daß der erste Schlitten horizontal bewegbar ist und die erste Antriebsspindel und die Antriebswellen an einer Seitenwand enden, an der außen der jeweils zugeordnete Antriebsmotor angeordnet ist.

Bei einer bevorzugten Ausführungsform ist die Spritzdüse bzw. der Spritzkopfhalter zusätzlich noch schwenkbar, so daß der Winkel, mit dem der spritzstrahl auf das Werkstück trifft, verändert werden kann. Dies läßt sich ohne zusätzliche Antriebsmittel in konstruktiv einfacher Weise dadurch erreichen, daß der dritte Schlitten eine drehfest gelagerte Schlittenpartie und ein von der Abtriebsspindel durchgriffenes und um diese mit Bezug auf die drehfest gelagerte Schlittenpartie drehbares Schwenkteil enthält, an dem der rotierbare Spritzkopfträger angeordnet ist, wobei das Schwenkteil in unterschiedlichen Schwenkstellungen mittels einer ersten Arretiereinrichtung mit Bezug auf die drehfest gelagerte Schlittenpartie und der Spritzkopfträger mittels einer zweiten Arretiereinrichtung mit Bezug auf das Schwenkteil drehfest arretierbar ist, derart, daß, wenn die Abtriebswelle umläuft, bei wirksamer erster Arretiereinrichtung und unwirksamer zweiter Arretiereinrichtung der Spritzkopfträger rotiert und bei unwirksamer erster Arretiereinrichtung und wirksamer zweiter Arretiereinrichtung über das vom Spritzkopfträger her arretiere Winkelgetriebe auf das Schwenkteil eine diese drehende und mit diesem den Spritzkopfträger verschwenkende, von der Abtriebswelle abgeleitete Schwenkkraft ausgeübt wird.

Ein Ausführungsbeispiel der Erfindung und weitere zweckmäßige Ausgestaltungen, die in den übrigen Unteransprüchen angegeben sind, werden nun anhand der Zeichnung erläutert. Es Zeigen:
- Figur 1: eine erfindungsgemäße Vorrichtung in schematischer Darstellung in Schrägansicht, wobei das Kabinengehäuse aufgeschnitten ist, so daß die darin enthaltenen Teile sichtbar sind, und
- Figur 2: den dritten Schlitten in einer schnittähnlichen, zur Figur 1 parallelen Ansicht, wobei es sich lediglich um eine schematische Darstellung handelt, in der die Umrißlinie des Schwenkteils nur strichpunktiert angedeutet ist.

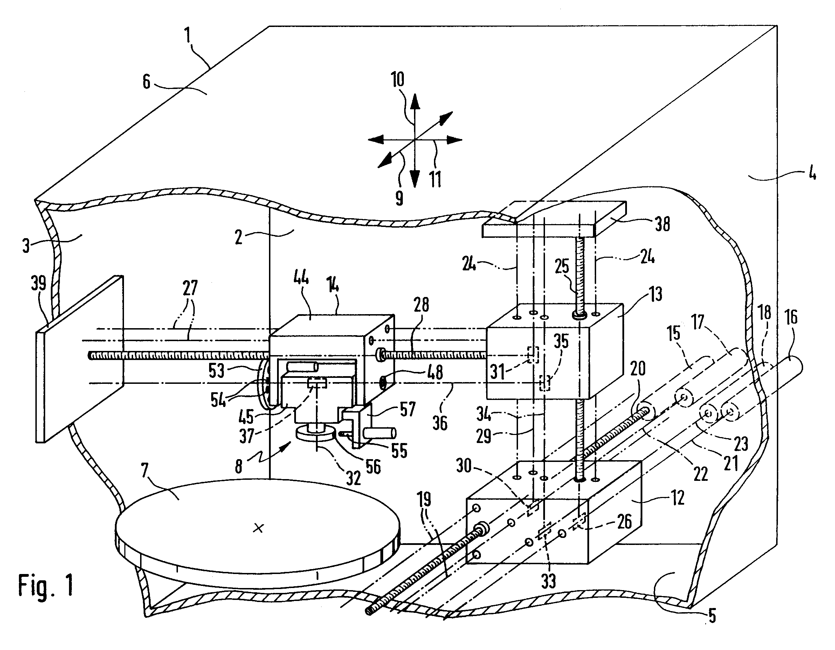

Bevor die aus der Zeichnung hervorgehende Vorrichtung erläutert wird, wird mit Bezug auf die Figur 1 noch darauf hingewiesen, daß alle Wellen nur durch ihre strichpunktiert gezeichneten Achslinien und alle Führungssäulen durch ihre strichdoppelpunktiert gezeichneten Achlinien dargestellt sind, wobei die Wellen ferner über die Schlitten hinweg durchgezeichnet sind, obwohl sie diese durchgreifen. Von den Antriebsspindeln sind die innerhalb der Schlitten verlaufenden Bereiche ebenfalls strichpunktiert gezeichnet.

Im Inneren einer Behandlungskabine 1, von der die Seitenwand 2, die beiden rechtwinkelig von dieser abgehenden und geschnitten gezeichneten Seitenwände 3, 4, die Bodenwand 5 und die Oberwand 6 aus Figur 1 hervorgehen, ist eine Halteeinrichtung 7, beim Ausführungsbeispiel in Gestalt eines Drehtellers, zum Halten eines Werkstücks angeordnet, das mittels eines Flüssigkeits-Spritzstrahls gereinigt und/oder entgratet werden soll. Bei der den Spritzstrahl bildenden Flüssigkeit handelt es sich regelmäßig um Wasser. Der Druck, mit dem die Flüssigkeit gegen das Werkstück gerichtet wird, richtet sich nach den jeweiligen Erfordernissen und kann, sieht man von Sonderfällen ab, bis zu 1 000 bar betragen.

Der Spritzkopf mit der Spritzdüse, aus der der Wasserstrahl austritt, und das zugehörige Wasserzufuhrsystem interessieren im vorliegenden Zusammenhang nicht weiter, so daß sie nicht dargestellt sind. Aus der Zeichnung ist jedoch der Spritzkopfträger 8 ersichtlich, der beim Ausführungsbeispiel einen Ringflansch zum Anflanschen des Spritzkopfes aufweist.

Der Spritzkopfträger 8 ist in allen drei durch die Doppelpfeile 9, 10, 11 symbolisierten Raumrichtungen bewegbar, die rechtwinkelig zueinander stehen. Auf diese Weise kann der Spritzkopfträger 8 an jede Stelle innerhalb der Behandlungskabine 1 gebracht werden und je nach der Maschinensteuerung eine aus den drei zueinander rechtwinkeligen Bewegungen zusammengesetzte kombinierte Bewegung mit beliebigem Verlauf ausführen. Innerhalb der Kabine 1 sind ferner ein erster Schlitten 12, ein zweiter Schlitten 13 und ein dritter Schlitten 14 angeordnet, die jeweils einer der drei Bewegungsrichtungen 9 bzw. 10 bzw. 11 des Spritzkopfträgers 8 zugeordnet sind. Jeder dieser Schlitten ist in der ihm zugeordneten Richtung bewegbar, wobei der Antrieb für den ersten Schlitten 12 von einem ersten Antriebsmotor 15, der Antrieb für den zweiten Schlitten 13 von einem zweiten Antriebsmotor 16 und der Antrieb für den dritten Schlitten 14 von einem dritten Antriebsmotor 17 aus erfolgt. Während alle anderen Antriebsteile wie die Schlitten innerhalb der Kabine 1 angeordnet sind, befinden sich die Antriebsmotoren 15, 16, 17 - dies gilt auch für den weiteren Motor 18, auf den später zurückgekommen werden wird - außerhalb der Kabine, so daß sie gegen Nässe geschützt angeordnet sind.

Der erste Schlitten 12, der den Antriebsmotoren 15, 16, 17, 18 zugewandt ist, ist an einer beim Ausführungsbeispiel von zwei Führungssäulen 19 gebildeten Führungseinrichtung in der ersten Raumrichtung 9 geführt. Dabei ist die Führungseinrichtung 19 kabinenfest angeordnet. Beim Ausführungsbeispiel ist der erste Schlitten 12 horizontal bewegbar, d. h. die Raumrichtung 9 erstreckt sich in der Horizontalen, so daß die Führungseinrichtung entsprechend horizontal verläuft, wobei sie im Bereich der Kabinen-Seitenwand 2 und der dieser entgegengesetzten, in Figur 1 nicht sichtbaren Kabinen-Seitenwand festgelegt sein kann. Der erste Schlitten 12 steht ferner mit einer ersten, zur ersten Führungseinrichtung 19 parallelen Antriebsspindel 20 in treibender Verbindung, die ortsfest in der Kabine angeordnet ist und vom ersten Antriebsmotort 15 angetrieben wird. Wird die Antriebsspindel 20 also vom zugehörigen Motor 15 zu einer Drehbewegung angetrieben, verschiebt sich der erste Schlitten 12 längs der Antriebsspindel 20 in der Raumrichtung 9.

Der erste Schlitten 12 wird ferner von zwei den beiden anderen Schlitten 13, 14 zugeordneten Antriebswellen 21, 22 durchgriffen, die parallel zur ersten Antriebsspindel 20 verlaufen und ebenfalls ortsfest in der Kabine 1 angeordnet sind. Dabei wird die Antriebswelle 21 von dem Antriebsmotor 16 und die Antriebswelle 22 von dem Antriebsmotor 17 angetrieben.

Zusätzlich zu den beiden den Schlitten 13, 14 zugeordneten Antriebswellen 21, 22 ist noch eine weitere Antriebswelle 23 vorhanden, die ebenfalls parallel zur ersten Antriebsspindel 20 und den Antriebswellen 21, 22 verläuft, ortsfest in der Kabine 1 angeordnet ist und von dem bereits erwähnten Motor 18 angetrieben wird. Auch die weitere Antriebswelle 23 durchgreift den ersten Schlitten 12.

Wie bereits erwähnt, bewegt sich der Schlitten 12 in der horizontalen Raumrichtung 9. Dementsprechend verlaufen auch die erste Antriebsspindel 20 sowie die Antriebswellen 21, 22, 23 in dieser Richtung, wobei sie an der Seitenwand 2 enden, an der außen die zugehörigen Motoren 15, 16, 17, 18 angeordnet sind. In der Zeichnung ist der jeweilige Motor in Verlängerung der Antriebsspindel bzw. der jeweils zugehörigen Antriebswelle gezeichnet. Selbstverständlich können die Motoren jedoch auch etwas abseits angeordnet und mit der Antriebsspindel bzw. den Antriebswellen über geeignete Transmissionen verbunden sein. Prinzipiell könnte der eine oder andere der Antriebsmotoren auch an der der Seitenwand 2 entgegengesetzten Seitenwand angeordnet sein, wenn dort eine entsprechende Lagerung der Antriebsspindel bzw. der Antriebswellen erfolgt.

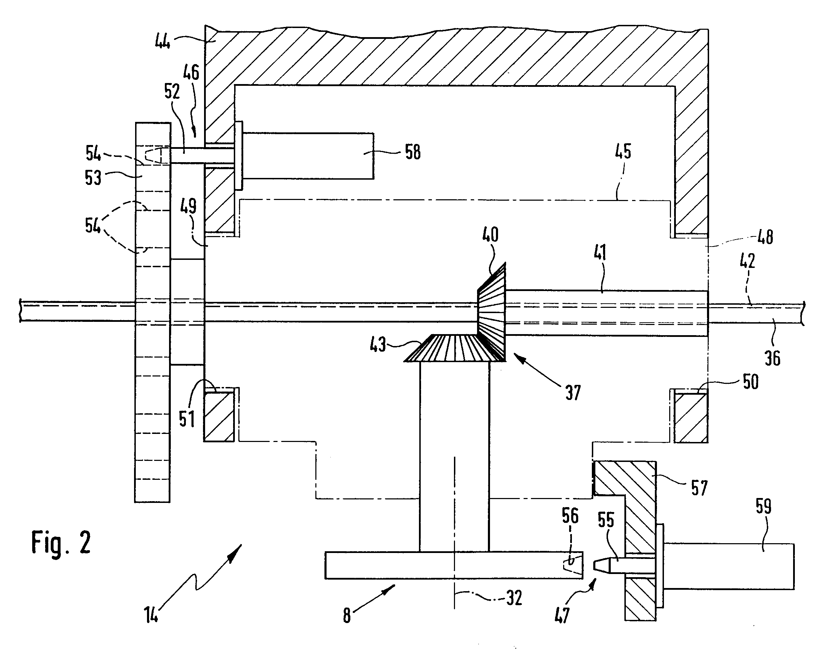

Der zweite Schlitten 13, der beim Ausführungsbeispiel in vertikaler Richtung (Raumrichtung 10) bewegbar ist, ist an einer zweiten Führungseinrichtung geführt, die beim Ausführungsbeispiel ebenfalls von zwei Führungssäulen 24 gebildet wird. Die zweite Führungseinrichtung 24 wird jedoch vom ersten Schlitten 12 getragen, d. h. die beiden Führungssäulen 24 stehen vom ersten Schlitten 12 hoch. Der erste Schlitten 12 trägt ferner eine zweite, zur zweiten Führungseinrichtung 24 parallele Antriebsspindel 25, die mit dem zweiten Schlitten 13 in treibendem Eingriff steht, so daß sich bei einer Drehbewegung der Antriebsspindel 25 um ihre eigene Achse der zweite Schlitten 13 in der zweiten Raumrichtung 10 bewegt. Dabei ist die zweite Antriebsspindel 25 am ersten Schlitten 12 gelagert und dort mit der bereits erwähnten Antriebswelle 21, die dem zweiten Schlitten 13 zugeordnet ist, über ein die Bewegung des ersten Schlittens 12 mitmachendes Winkelgetriebe 26 treibend verbunden, das nur symbolisch durch ein gestrichelt gezeichnetes Rechteck angedeutet ist. Es kann sich hier um ein entsprechendes Winkelgetriebe handeln, wie es anhand der Figur 2 noch erläutert werden wird. Fährt also der erste Schlitten 12 längs der Raumrichtung 9, nimmt er die zweite Antriebsspindel 25 zusammen mit dem Winkelgetriebe 26 mit, so daß der zweite Schlitten 13 unabhängig von der momentanen Position des ersten Schlittens 12 in Bewegungsrichtung 10 verstellt werden kann.

Der dritte Schlitten 14, an dem der Spritzkopfträger 8 angeordnet ist, ist an einer vom zweiten Schlitten 13 getragenen dritten Führungsrichtung in der dritten Raumrichtung 11 geführt, wobei es sich auch bei dieser dritten Führungseinrichtung wie beim Ausführungsbeispiel um zwei Führungssäulen 27 handeln kann, die vom zweiten Schlitten 13 wegragen und den dritten Schlitten 14 durchsetzen.

Wie bereits erwähnt, verläuft beim Ausführungsbeispiel die zweite Antriebsspindel 25 und somit die Bewegungsrichtung 10 des zweiten Schlittens 13 in vertikaler Richtung. Dementsprechend ist der dritte Schlitten 14 wieder horizontal, dabei jedoch quer zum ersten Schlitten 12 bewegbar.

Der dritte Schlitten 14 steht ferner mit einer dritten, zur dritten Führungseinrichtung 27 parallelen und vom zweiten Schlitten 13 getragenen Antriebsspindel 28 in treibendem Eingriff, so daß sich der dritte Schlitten 14 bei um ihre Achse rotierender Antriebsspindel 28 längs dieser verlagert.

Die dritte Antriebsspindel 28 ist mit der bereits erwähnten Antriebswelle 22 treibend verbunden, die dem dritten Schlitten 14 zugeordnet ist. Hierzu ist eine vom ersten Schlitten 12 getragene, zur zweiten Antriebsspindel 25 parallele und den zweiten Schlitten 13 durchgreifende Zwischenwelle 29 vorhanden, die einerseits am ersten Schlitten 12 über ein die Bewegung des ersten Schlittens 12 mitmachendes Winkelgetriebe 30 mit der dem dritten Schlitten 14 zugeordneten Antriebswelle 22 und andererseits am zweiten Schlitten 13 über ein die Bewegung des zweiten Schlittens 13 mitmachendes Winkelgetriebe 31 mit der dritten Antriebsspindel 28 treibend verbunden ist. Die beiden Winkelgetriebe 30, 31 können gleich wie das Winkelgetriebe 26 ausgebildet sein. Das Winkelgetriebe 30 ist zusammen mit der Zwischenwelle 29 längs der Antriebswelle 22 verfahrbar, während das Winkelgetriebe 31 zusammen mit der dritten Antriebsspindel 28 längs der Zwischenwelle 29 verfahrbar ist.

Der Spritzkopfträger 8 ist ferner zu einer Rotationsbewegung um seine zur Bewegungsrichtung 11 des dritten Schlittens 14 rechtwinkelige Spritzkopf-Achslinie 32 antreibbar. Dies erfolgt von der bereits erwähnten weiteren Antriebswelle 23 bzw. dem zugehörigen Motor 18 aus. Diese Antriebswelle 23 treibt über ein am ersten Schlitten 12 angeordnetes und dessen Bewegung mitmachendes Winkelgetriebe 33 eine weitere vom ersten Schlitten 12 getragene, zur zweiten Antriebsspindel 25 parallele und den zweiten Schlitten 13 durchgreifende Zwischenwelle 34, die über ein am zweiten Schlitten 13 angeordnetes und dessen Bewegung mitmachendes Winkelgetriebe 35 mit einer zur dritten Antriebsspindel 28 parallelen und vom zweiten Schlitten 13 getragenen Abtriebswelle 36 verbunden ist. Die Abtriebswelle 36 ist über ein am dritten Schlitten 14 angeordnetes und dessen Bewegung mitmachendes Winkelgetriebe 37 mit dem Spritzkopfträger 8 treibend verbunden, so daß die Rotationsbewegung der Abtriebswelle 36 in eine Rotation des Spritzkopfträgers 8 umgesetzt wird.

Die zweite Führungseinrichtung (Führungssäulen 24), die zweite Antriebsspindel 25 und die Zwischenwelle 29 sowie bei Vorhandensein auch die Zwischenwelle 34 können mit ihren dem ersten Schlitten 12 entgegengesetzten Endbereichen an einer die Bewegung des ersten Schlittens 12 mitmachenden Lagerplatte 38 oder dergleichen gelagert sein.

Dementsprechend können die dritte Führungseinrichtung (Führungssäulen 27), die dritte Antriebsspindel 28 und bei Vorhandensein die Abtriebswelle 36 mit ihren dem zweiten Schlitten 13 entgegengesetzten Endbereichen an einer die Bewegung des zweiten Schlittens 13 mitmachenden Lagerplatte 39 oder dergleichen gelagert sein.

Wie bereits erwähnt, können alle Winkelgetriebe gleich ausgebildet sein. Prinzipiell könnte es sich jedoch auch um unterschiedliche Anordnungen handeln, mit denen der gewünschte Zweck erreicht wird. Aus Figur 2 geht das am dritten Schlitten 14 angeordnete Winkelgetriebe 37 im einzelnen hervor, wobei die anderen Winkelgetriebe entsprechend aufgebaut sein können:

Es handelt sich um ein Kegelradgetriebe, bei dem das im Kraftfluß dem zugehörigen Antriebsmotor 18 zugewandte Kegelrad 40 drehfest und dabei längsverschieblich auf der zugehörigen Welle 36 sitzt. Beim Ausführungsbeispiel sitzt das Kegelrad 40 an einer auf die Welle 36 aufgesteckten Hülse 41, die drehfest und dabei längsverschieblich auf die Welle 36 aufgekeilt ist. Die zugehörige Längsnut 42 in der Welle 36 ist gestrichelt angedeutet. Das mit dem Kegelrad 40 kämmende und im Kraftfluß nachgeordnete Kegelrad 43 ergibt einen nach Art eines T von der Welle 36 abgehenden Kraftfluß und treibt im Falle des Winkelgetriebes 37 den Spritzkopfträger 8, der entsprechend drehbar im dritten Schlitten gelagert ist.

Mit den bis jetzt beschriebenen Maßnahmen bleibt der Spritzkopfträger und somit die Spritzdüse stets gleich ausgerichtet. Dabei ist in der Zeichnung die zugehörige Spritzkopf-Achslinie 32 vertikal ausgerichtet, so daß die Spritzdüse vertikal nach unten spritzen würde. Um diesbezüglich mehr Möglichkeiten zu erhalten, ist bei der dargestellten Vorrichtung ferner vorgesehen, daß man den Spritzkopfträger 8 um die Abtriebswelle 36 schwenken kann. Zu diesem Zwecke enthält der dritte Schlitten 14 eine mittels der dritten Führungseinrichtung 27 drehfest gelagerte Schlittenpartie 44 und ein von der Abtriebswelle 36 durchgriffenes und um diese mit Bezug auf die drehfest gelagerte Schlittenpartie 44 drehbares Schwenkteil 45, das in Figur 2 nur strichpunktiert angedeutet ist. An dem Schwenkteil 45 ist der rotierbare Spritzkopfträger 8 angeordnet. Ferner ist eine erste Arretiereinrichtung 46 vorhanden, mittels der das Schwenkteil 45 in unterschiedlichen Schwenkstellungen mit Bezug auf die drehfest gelagerte Schlittenpartie 44 arretierbar ist. Desweiteren kann der Spritzkopfträger 8 mittels einer zweiten Arretiereinrichtung 47 mit Bezug auf das Schwenkteil 45 drehfest arretiert werden. Diese beiden Arretiereinrichtungen 46, 47 ermöglichen die beiden folgenden Betriebsarten, wobei eine rotierende Abtriebswelle 36 vorausgesetzt wird:

Ist die erste Arretiereinrichtung 46, wie dargestellt, wirksam, d. h. ist das Schwenkteil 45 drehfest mit der Schlittenpartie 44 verbunden, und ist die zweite Arretiereinrichtung 47, wie dargestellt, unwirksam, so daß der Spritzkopfträger 8 rotieren kann, wird der Spritzkopfträger 8 über das Winkelgetriebe 37 in normaler Weise angetrieben.

Ist die erste Arretiereinrichtung dagegen unwirksam, so daß sich das Schwenkteil 45 mit Bezug auf die Schlittenpartie 44 verdrehen kann, während die zweite Arretiereinrichtung 47 wirksam ist, und somit den Spritzkopfträger 8 gegenüber dem Schwenkteil 45 arretiert, kann der Spritzkopfträger 8 nicht mehr rotieren, so daß das Winkelgetriebe 37 sozusagen gesperrt ist. Daher wird jetzt über das vom Spritzkopfträger 8 her arretierte Winkelgetriebe 37 auf den Spritzkopfträger 8 und damit auf das Schwenkteil 45 eine dieses drehende und damit den Spritzkopfträger 8 verschwenkende, von der Abtriebswelle 36 abgeleitete Schwenkkraft ausgeübt.

Man kann also durch Umstellen der beiden Arretiereinrichtungen entweder die Ausrichtung des Spritzstrahles verändern oder den Spritzkopfträger um seine eigene Achse rotieren lassen.

Das Schwenkteil 45 ist koaxial zur Abtriebswelle 36 drehbar an der Schlittenpartie 44 gelagert. Hierzu greifen beim Ausführungsbeispiel an beiden Enden des Schwenkteils 45 angeordnete Lagervorsprünge 48, 49 jeweils in eine zugehörige Lagerausnehmung 50 bzw. 51 an der drehfest angeordneten Schlittenpartie 44.

Die erste Arretiereinrichtung 46 weist einerseits, beim Ausführungsbeispiel an der Schlittenpartie 44, einen zwischen einer wirksamen (dargestellt) und einer unwirksamen Stellung verstellbaren Arretierbolzen 52 und andererseits, beim Ausführungsbeispiel an einer drehfest mit dem Schwenkteil 45 verbundenen Arretierscheibe 53, mehrere winkelmäßig versetzt zueinander angeordnete, jeweils einer Schwenkstellung des Schwenkteils 44 zugeordnete Arretierausnehmungen 54 zum Eingreifen des Arretierbolzens 52 auf. Das Schwenkteil 45 und mit diesem der Spritzkopfträger 8 kann also eine der Anzahl der Arretierausnehmungen 54 entsprechende Anzahl von Schwenkstellungen einnehmen, in denen der Arretierbolzen 52 in die jeweils gegenüberliegende Arretierausnehmung 54 eingreift (wirksame Stellung des Arretierbolzens).

In ähnlicher Weise enthält die zweite Arretiereinrichtung 47 ebenfalls einen Arretierbolzen 55, dem mindestens eine Arretierausnehmung 56 am Spritzkopfträger 8 zugeordnet ist, die beim Ausführungsbeispiel am Umfang des Befestigungsflansches des Spritzkopfträgers angeordnet ist. Der Arretierbolzen 55 sitzt am Schwenkteil 45 bzw. an einem fest mit diesem verbundenen Halteteil 57.

Die beiden Arretierbolzen 52, 55 werden beim zweckmäßigen Ausführungsbeispiel jeweils von der Kolbenstange eines Pneumatikzylinders 58 bzw. 59 gebildet bzw. ist an der Kolbenstange befestigt. Der Pneumatikzylinder 58 ist an der Schlittenpartie 44 und der Pneumatikzylinder 59 am Schwenkteil 45 angebracht.

In Abwandlung des dargestellten Ausführungsbeispiels ist es bei einer Variante möglich, daß das Schwenkteil 45 und mit diesem der Spritzkopfträger 8 in stufenlos aufeinanderfolgenden Schwenkstellungen arretierbar ist, beispielsweise indem die erste Arretiereinrichtung nach Art einer Scheibenbremse oder dergleichen ausgebildet ist. Man kann die Spritzdüse dann nicht nur wie beim Ausführungsbeispiel in winkelmäßig versetzt zueinander angeordnete Winkelstellungen bringen sondern stufenlos neigen.

## Patentansprüche

1. Vorrichtung zum Reinigen und/oder Entgraten von Werkstücken mittels eines Flüssigkeits-Spritzstrahls, mit einer Behandlungskabine, in der ein in drei zueinander rechtwinkeligen Raumrichtungen bewegbarer Spritzkopfträger angeordnet ist, wobei den Bewegungen in den drei Raumrichtungen jeweils ein außerhalb der Kabine angeordneter Antriebsmotor zugeordnet ist, dadurch gekennzeichnet, daß innerhalb der Kabine (1) drei jeweils einer der Raumrichtungsbewegungen des Spritzkopfträgers (8) zugeordnete Schlitten (12, 13, 14) angeordnet sind, daß der erste, antriebsseitige Schlitten (12) an einer kabinenfesten ersten Führungseinrichtung (Führungssäulen 19) in der ersten Raumrichtung (9) geführt ist und mit einer ersten, zur ersten Führungseinrichtung (Führungssäulen 19) parallelen, ortsfest in der Kabine (1) angeordneten und vom ersten Antriebsmotor (15) angetriebenen Antriebsspindel (20) in treibendem Eingriff steht, wobei der erste Schlitten (12) ferner von zwei den beiden anderen Schlitten (13, 14) zugeordneten, zur ersten Antriebsspindel (20) parallelen, ortsfest in der Kabine (1) angeordneten und von den beiden anderen Antriebsmotoren (16, 17) angetriebenen Antriebswellen (21, 22) durchgriffen wird, daß der zweite Schlitten (13) an einer vom ersten Schlitten (12) getragenen zweiten Führungseinrichtung (Führungssäulen 24) in der zweiten Raumrichtung (10) geführt ist und mit einer zweiten, zur zweiten Führungseinrichtung (Führungssäulen 24) parallelen und vom ersten Schlitten (12) getragenen Antriebsspindel (25) in treibendem Eingriff steht, die am ersten Schlitten (12) mit der dem zweiten Schlitten (13) zugeordneten Antriebswelle (21) über ein die Bewegung des ersten Schlittens (12) mitmachendes Winkelgetriebe (26) treibend verbunden ist und daß der dritte Schlitten (14), an dem der Spritzkopfträger (8) angeordnet ist, an einer vom zweiten Schlitten (13) getragenen dritten Führungseinrichtung (Führungssäulen 27) in der dritten Raumrichtung (11) geführt ist und mit einer dritten, zur dritten Führungseinrichtung (Führungssäulen 27) parallelen und vom zweiten Schlitten (13) getragenen Antriebsspindel (28) in treibendem Eingriff steht, die mit der dem dritten Schlitten (14) zugeordneten Antriebswelle (22) treibend verbunden ist, in dem eine vom ersten Schlitten (12) getragene, zur zweiten Antriebsspindel (25) parallele und den zweiten Schlitten (13) durchgreifende Zwischenwelle (29) einerseits am ersten Schlitten (12) über ein die Bewegung des ersten Schlittens (12) mitmachendes Winkelgetriebe (30) mit der dem dritten Schlitten (14) zugeordneten Antriebswelle (22) und andererseits am zweiten Schlitten (13) über ein die Bewegung des zweiten Schlittens (13) mitmachendes Winkelgetriebe (31) mit der dritten Antriebsspindel (28) treibend verbunden ist.

2. Vorrichtung nach Anspruch 1, dadurch gekennzeichnet, daß der Spritzkopfträger (8) zu einer Rotationsbewegung um die zur Bewegungsrichtung (11) des dritten Schlittens (14) rechtwinkelige Spritzkopf-Achslinie (32) antreibbar ist, indem der erste Schlitten (12) von einer weiteren, zu den anderen Antriebswellen (21, 22) parallelen, ortsfest in der Kabine (1) angeordneten und von einem weiteren, außerhalb der Kabine (1) sitzenden Antriebsmotor (18) angetriebenen Antriebswelle (23) durchgriffen wird, die über ein am ersten Schlitten (12) angeordnetes Winkelgetriebe (33) eine weitere vom ersten Schlitten (12) getragene, zur zweiten Antriebsspindel (25) parallele und den zweiten Schlitten (13) durchgreifende Zwischenwelle (34) treibt, die über ein am zweiten Schlitten (13) angeordnetes Winkelgetriebe (35) mit einer zur dritten Antriebsspindel (28) parallelen und vom zweiten Schlitten (13) getragenen Abtriebswelle (36) treibend verbunden ist, die ihrerseits über ein am dritten Schlitten (14) angeordnetes und dessen Bewegung mitmachendes Winkelgetriebe (37) mit dem Spritzkopfträger (8) treibend verbunden ist.

3. Vorrichtung nach Anspruch 1 oder 2, dadurch gekennzeichnet, daß der erste Schlitten (12) horizontal bewegbar ist und die erste Antriebsspindel (20) und die Antriebswellen (21, 22, 23) an einer Seitenwand (2) enden, an der außen der jeweils zugeordnete Antriebsmotor angeordnet ist.

4. Vorrichtung nach Anspruch 3, dadurch gekennzeichnet, daß der zweite Schlitten (13) vertikal und der dritte Schlitten (14) horizontal, jedoch quer zum ersten Schlitten (12) bewegbar ist.

5. Vorrichtung nach einem der Ansprüche 1 bis 4, dadurch gekennzeichnet, daß die Winkelgetriebe (26, 30, 31, 33, 35, 37) mindestens zum Teil Kegelradgetriebe sind, bei denen das im Kraftfluß dem zugehörigen Antriebsmotor zugewandte Kegelrad (40) drehfest und dabei längsverschieblich auf der zugehörigen Welle (36) sitzt.

6. Vorrichtung nach einem der Ansprüche 1 bis 5, dadurch gekennzeichnet, daß die zweite Führungseinrichtung (Führungssäulen 24), die zweite Antriebsspindel (25) und die mindestens eine Zwischenwelle (29, 34) mit ihren dem ersten Schlitten (12) entgegengesetzten Endbereichen an einer die Bewegung des ersten Schlittens (12) mitmachenden Lagerplatte (38) oder dergleichen gelagert sind.

7. Vorrichtung nach einem der Ansprüche 1 bis 6, dadurch gekennzeichnet, daß die dritte Führungseinrichtung (Führungssäulen 27), die dritte Antriebsspindel (28) und gegebenenfalls die Abtriebswelle (36) mit ihren dem zweiten Schlitten (13) entgegengesetzten Endbereichen an einer die Bewegung des zweiten Schlittens (13) mitmachenden Lagerplatte (39) oder dergleichen gelagert sind.

8. Vorrichtung nach einem der Ansprüche 2 bis 7, dadurch gekennzeichnet, daß der dritte Schlitten (14) eine drehfest gelagerte Schlittenpartie (44) und ein von der Abtriebswelle (36) durchgriffenes und um diese mit Bezug auf die drehfest gelagerte Schlittenpartie (44) drehbares Schwenkteil (45) enthält, an dem der rotierbare Spritzkopfträger (8) angeordnet ist, wobei das Schwenkteil (45) in unterschiedlichen Schwenkstellungen mittels einer ersten Arretiereinrichtung (46) mit Bezug auf die drehfest gelagerte Schlittenpartie (44) und der Spritzkopfträger (8) mittels einer zweiten Arretiereinrichtung (47) mit Bezug auf das Schwenkteil (45) drehfest arretierbar ist, derart, daß, wenn die Abtriebswelle (36) umläuft, bei wirksamer erster Arretiereinrichtung (46) und unwirksamer zweiter Arretiereinrichtung (47) der Spritzkopfträger (8) rotiert und bei unwirksamer erster Arretiereinrichtung (46) und wirksamer zweiter Arretiereinrichtung (47) über das vom Spritzkopfträger (8) her arretierte Winkelgetriebe (37) auf das Schwenkteil (45) eine dieses drehende und mit diesem den Spritzkopfträger (8) verschwenkende, von der Abtriebswelle (36) abgeleitete Schwenkkraft ausgeübt wird.

9. Vorrichtung nach Anspruch 8, dadurch gekennzeichnet, daß mindestens eine der Arretiereinrichtungen (46, 47) einerseits einen zwischen einer wirksamen und einer unwirksamen Stellung verstellbaren Arretierbolzen (52, 55) und andererseits im Falle der ersten Arretiereinrichtung (46) mehrere winkelmäßig versetzt zueinander angeordnete, jeweils einer Schwenkstellung des Schwenkteils (45) zugeordnete Arretierausnehmungen (54) bzw. im Falle der zweiten Arretiereinrichtung (47) mindestens eine Arretierausnehmung (56) zum Eingreifen des Arretierbolzens (52, 55) aufweist.

10. Vorrichtung nach Anspruch 9, dadurch gekennzeichnet, daß der Arretierbolzen (52, 55) von der Kolbenstange eines Pneumatikzylinders (58, 59) gebildet wird bzw. an dieser befestigt ist.

11. Vorrichtung nach einem der Ansprüche 8 bis 10, dadurch gekennzeichnet, daß das Schwenkteil in stufenlos aufeinanderfolgenden Schwenkstellungen arretierbar ist, beispielsweise indem die erste Arretiereinrichtung nach Art einer Scheibenbremse oder dergleichen ausgebildet ist.
